**Europäisches Patentamt**

**European Patent Office**

**Office européen des brevets**

(19)

(11) Veröffentlichungsnummer: **0 226 159**
A2

(12)

# EUROPÄISCHE PATENTANMELDUNG

(21) Anmeldenummer: **86117055.3**

(22) Anmeldetag: **08.12.86**

(51) Int. Cl.⁴: **A 47 C 31/11**
**A 47 C 7/02**

(30) Priorität: **06.12.85 DE 3543138**

(43) Veröffentlichungstag der Anmeldung:
**24.06.87 Patentblatt 87/26**

(84) Benannte Vertragsstaaten:
**AT BE CH DE FR GB IT LI LU NL SE**

(71) Anmelder: **Emil Bayer & Co KG**
**Unterfarrnbacher Str. 55**
**D-8510 Fürth(DE)**

(72) Erfinder: **Pfau, Dieter**
**Habichtstrasse 18 c**
**D-8510 Fürth(DE)**

(74) Vertreter: **Hafner, Dieter, Dr.rer.nat., Dipl.-Phys.**
**Ostendstrasse 132**
**D-8500 Nürnberg 30(DE)**

(54) **Überzug für Sitze in Kraftfahrzeugen.**

(57) Zur Anpassung eines Sitzes in Kraftfahrzeugen an die Gestaltung eines Sportsitzes ist im Sitzabschnitt 3 eines Überzuges 1 ein zusätzlicher Sitzteil 7 vorgesehen, der um eine Querschwenkachse 6 nach vorne oder nach hintenklappbar ist. Zusätzliche Randwülste am Sitzabschnitt 3 bzw. am Rückenabschnitt 2 erhöhen die Anpassung an den Charakter eines Sportsitzes. Zusätzlich können Beuteltaschen 9, angebracht bzw. vorgesehen sein.

EP 0 226 159 A2

Die Erfindung betrifft Überzüge für Sitze in Kraftfahrzeugen, bestehend aus einem Rückenabschnitt und einem Sitzabschnitt, aus Natur-bzw. Kunststoffmaterial.

Überzüge die nachträglich an Sitzen in Kraftfahrzeugen angebracht werden können, sind in vielgestaltigen Ausführungsformen bekannt. Derartige Überzüge dienen beispielsweise als Schonbezüge für die ursprünglichen Sitzbezüge um deren Oberfläche und Struktur auch nach längerer Benutzungszeit des zugehörigen Kraftfahrzeuges beizubehalten. Ferner sind derartige Überzüge oder Bezüge als Wärmeschutz vorgesehen. In diesem Fall bestehen die Überzüge vorzugsweise aus fellartigem oder pelzartigem Material. Schließlich werden derartige Überzüge auch als Dekoration verwendet. Als Materialien für die vorgenannten Überzüge kann Leinen, Leder, Fell, Pelz oder entsprechende Kunststoffe verwendet sein.

Der Erfindung liegt die Aufgabe zugrunde, einen Überzug zu schaffen, der es ermöglicht, einem normalen Sitz den Charakter eines Sportsitzes zu verleihen.

Diese Aufgabe wird nach der Erfindung im wesentlichen dadurch gelöst, daß am Sitzabschnitt ein, um eine Querschwenkachse klappbarer, zusätzlicher Sitzteil vorgesehen ist.

In vorteilhafter Weise ist die Querschwenkachse in der vorderen Hälfte des Sitzabschnittes angeordnet.

In besonders vorteilhafter Weise ist der zusätzliche Sitzteil als Sitzkeil ausgebildet und seine Schmalkante befindet sich an der Querschwenkachse.

Wird der nach der Erfindung vorgesehene zusätzliche Sitzteil nach hinten, d.h. in Richtung zum Rückenteil geklappt, dann ergibt sich eine Erhöhung der Sitzfläche, die insbesondere von kleineren Personen begrüßt wird, da sie dadurch eine bessere Sicht über das Lenkrad erhalten. Wird hingegen der zusätzliche Sitzteil nach vorne geklappt, dann wird dadurch die Sitzfläche nach vorne verlängert und den Oberschenkeln des jeweiligen Benutzers eine verlängerte Auflagefläche geboten.

Der bei vorgeklapptem zusätzlichen Sitzteil entstehende Freiraum unter der Sitzfläche wird zweckmäßig dadurch ausgenutzt, daß am vorderen Ende des Sitzabschnittes eine vordere Beuteltasche befestigt ist. Die Beuteltasche kann als offener Beutel oder auch als Tasche mit Verschlußmitteln ausgebildet sein.

Zur Befestigung der Beuteltasche am vorderen Ende des Sitzabschnittes ist zweckmäßiger Weise ein Klettstreifen an der Beuteltasche vorgesehen. An der Vorderkante des Sitzabschnittes ist nach einer weiteren Ausgestaltung der Erfindung ein Veloursabschnitt als Gegenfläche für den Klettstreifen vorgesehen. Der Veloursabschnitt kann in den Überzug eingearbeitet oder zusätzlich auf den Überzug aufgebracht sein.

Zur weiteren Anpassung des Sitzes an einen Sportsitz sind in weiterer Ausgestaltung der Erfindung an den Längskanten des Sitzabschnittes Randwulste eingearbeitet.

In analoger Weise können, in noch weiterer Ausgestaltung der Erfindung, an den Seitenkanten des Rückenabschnittes ebenfalls Randwülste eingearbeitet sein.

Gemäß einer Weiterbildung der Erfindung ist am Rückenabschnitt rückseitig eine hintere Beuteltasche befestigt.

Nach einem weiteren Merkmal der Erfindung weist die Beuteltasche mindestens einen Klettstreifen auf. Zur Befestigung der hinteren Beuteltasche mittels des oder der Klettstreifen an der Rückseite des Rückenabschnittes ist ein Veloursabschnitt als Gegenfläche für den oder die Klettstreifen der Beuteltasche vorgesehen. Auch dieser Veloursabschnitt kann in den Überzug eingearbeitet oder zusätzlich auf den Überzug an der entsprechenden Stelle angebracht sein.

In weiterer Ausgestaltung der Erfindung ist im unteren Bereich des Rückabschnittes eine Lumbalstütze vorgesehen.

Der erfindungsgemäße Überzug kann aus einem getrennten Sitzabschnitt und einem getrennten Rückenabschnitt bestehen. Gemäß einem bevorzugten Ausführungsbeispiel der Erfindung sind Sitzteil und Rückenteil einstückig ausgebildet.

Einzelheiten, Merkmale und Vorteile der Erfindung werden anhand der Zeichnung, die ein Ausführungsbeispiel darstellt, näher erläutert. Dabei zeigt:

Fig 1. schematisch einen an einem Kraftfahrzeugsitz angeordneten erfindungsgemäßen Überzug in Vorderansicht, und

Fig.2 einen Überzug nach Fig.1 in schematischer Schrägansicht von hinten.

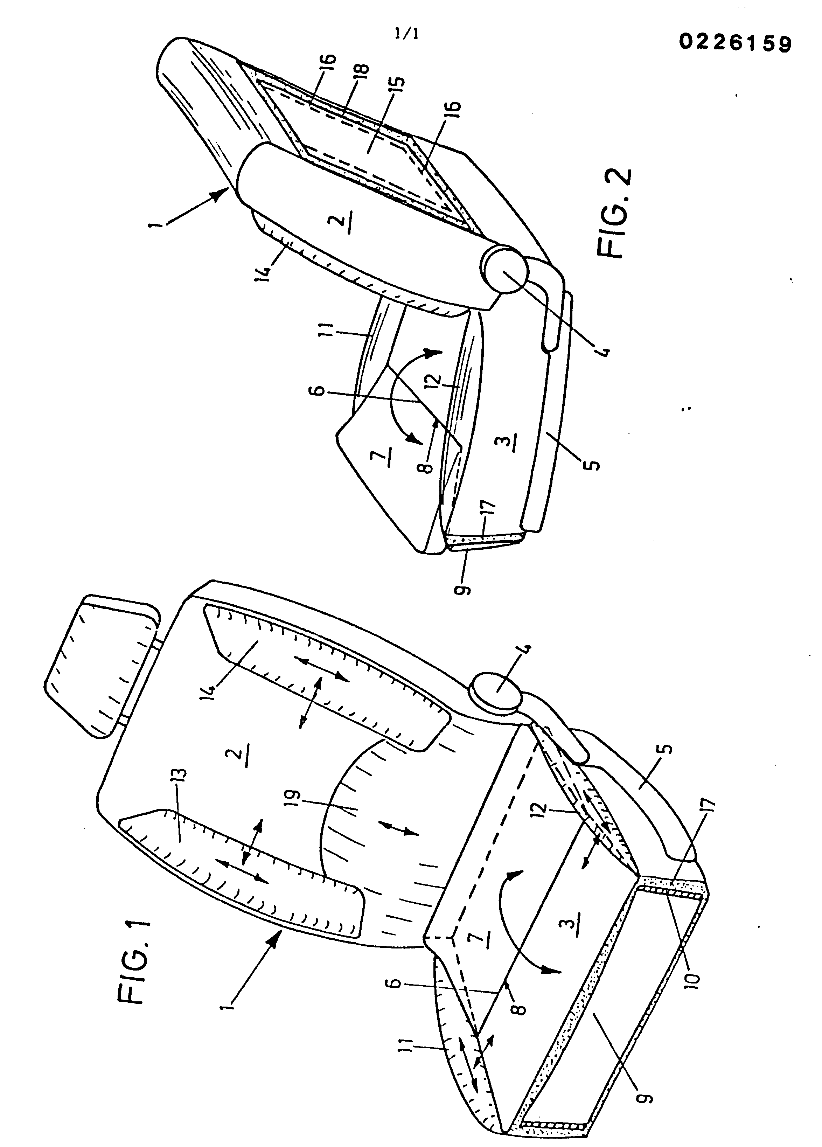

In Fig. 1 ist ein erfindungsgemäßer Überzug 1 in
Verbindung mit einem Kraftfahrzeugsitz dargestellt.
Der Sitz befindet sich, wie bekannt, auf Sitzkufen
5 die eine Verschiebung des Sitzes innerhalb des
Fahrgastraumes in Längsrichtung ermöglichen. Der
Überzug 1 weist einen Rückenabschnitt 2 und einen
Sitzabschnitt 3 auf, wobei der entsprechende
Rückenteil des Sitzes um eine Rücklehnenverstellvorrichtung 4 stufenlos oder in Stufen in
seiner Neigung verstellt werden kann. Am Sitzabschnitt 3 ist ein um eine Querschwenkachse 6
klappbarer zusätzlicher Sitzteil 7 vorgesehen.
Dieser zusätzliche Sitzteil 7 ist vorzugsweise
keilförmig ausgebildet, wobei sich seine Schmalkante im Bereich der Querschwenkachse 6 befindet.

Der zusätzliche Sitzteil 7 ist, wie durch den
Doppelpfeil angedeutet, nach hinten, in Richtung
zum Rückenabschnitt 2 und nach vorne zur Vorderkante des Sitzabschnittes 3, klappbar. Wird der
zusätzliche Sitzteil 7 nach rückwärts geklappt,
dann wird dadurch die Sitzfläche erhöht, so daß der
jeweilige Benutzer höher über den Fahrgastraum-
Boden sitzt und daher eine bessere Aussicht durch
die Scheiben des Kraftfahrzeuges, insbesondere
durch die Frontsichtscheibe, erhält.

Wird der zusätzliche Sitzteil 7 jedoch nach vorne geklappt, dann wird die Sitzfläche verlängert, insbesondere dadurch, daß die Querschwenkachse 6 sich in der vorderen Hälfte des Sitzabschnittes 3 befindet. In der vorderen Lage des zusätzlichen Sitzteiles 7 erhält der Sitz im wesentlichen den Charakter eines Sportsitzes mit verlängerter Auflage für die Beine des Benutzers bei relativ tieferer Sitzfläche.

Zur weiteren Anpassung des mit dem erfindungsgemäßen Überzug 1 versehenen vorzugsweise serienmäßigen Sitzes an einen Sportsitz sind an den Seitenkanten des Sitzabschnittes 3 Randwülste 11 und 12 eingearbeitet.

In noch weiterer Ausgestaltung weist auch der Rückenabschnitt 2 seitliche Randwülste 13 und 14 auf. Im Rückenabschnitt 2 kann im unteren Bereich eine Lumbalstütze 19 eingearbeitet sein.

In ansich bekannter Weise kann der Überzug 1 Öffnungen zum Einstecken einer Nackenstütze in die Rücklehne aufweisen.

Da bei vorgeklappten zusätzlichen Sitzteil 7 sich unter der Vorderkante des Sitzteiles 7 über der Vorderseite des Sitzabschnittes 3 ein Freiraum entsteht, kann in vorteilhafter Weise am Sitzabschnitt 3 eine vordere Beuteltasche 9 angebracht werden. Diese Beuteltasche kann als offener Beutel oder als verschließbare Tasche ausgebildet sein und wird vorzugsweise mit Hilfe eines an der Beuteltasche 9 angebrachten Klettstreifens 10 mit dem Unterteil des Sitzabschnittes 3 verbunden. Um eine sichere Verbindung zu schaffen, ist es ferner vorteilhaft, wenn dieser untere Bereich des Sitzabschnittes 3 einen Veloursbelag oder einen Veloursabschnitt 17 als Gegenfläche für den Klettstreifen der vorderen Beuteltasche 9 aufweist. Anstelle eines Klettstreifens können auch mehrere Klettstreifen vorgesehen sein.

In analoger Weise ist es möglich, an der Rückseite der Rücklehne bzw. des Rückenabschnittes 2 eine hintere Beuteltasche 15 anzubringen. Auch in diesem Fall weist die Beuteltasche 15 mindestens einen Klettstreifen 16 auf, der zur Befestigung an der Rückseite des Überzuges 1 oder des Bezuges des Rückenabschnittes 2 dient. Zur besseren Verbindung der hinteren Beuteltasche 15 mittels der Klettstreifen 16 ist zweckmäßiger Weise im Bereich der hinteren Beuteltasche 15 ein Veloursabschnitt 18 vorgesehen. Der Veloursabschnitt kann Teil des Überzuges 1 sein oder aber auch zusätzlich angeordnet werden.

Der erfindungsgemäße Überzug 1 kann aus getrenntem Rückenabschnitt und Sitzabschnitt bestehen. Er kann aber auch einteilig bzw.einstückig ausgebildet sein.

Der zusätzliche Sitzteil 7 kann mit dem Sitzabschnitt 3 einstückig ausgebildet sein oder aber auch als getrennter Teil nachträglich mit dem Sitzabschnitt 3 verbunden werden. Die Querschwenkachse 6 kann durch die Vorderkante des Sitzteiles 7 gebildet sein oder aber auch als Falte im Sitzabschnitt 3. Sie kann ferner auch als Schwenkstange im Sitzabschnitt 3 eingearbeitet sein. Im übrigen kann der Überzug 1 in ansich bekannter Weise eine Struktur, Dekorationen und/oder abgesteppte Feldflächen aufweisen.

Die Erfindung, klappbarer zusätzlicher Sitzteil am Sitzabschnitt wurde vorstehend anhand eines Überzuges für Sitze beschrieben. Die Erfindung kann aber auch ohne weiteres bei Polsterbezügen für Erstausstattung derartiger Sitze Verwendung finden.

Die Erfindung ist daher nicht auf die dargestellten und beschriebenen Ausführungsbeispiele beschränkt. Sie umfaßt auch alle fachmännischen Abwandlungen, Weiterbildungen, Vereinfachungen und Anwendungen sowie Teil- und Unterkombinationen der beschriebenen und/oder dargestellten Merkmale und Maßnahmen.

## Bezugszeichenliste

| Nr. | Bezeichnung | Nr. | |
|-----|-------------|-----|---|
| 1 | Überzug | 41 | |
| 2 | Rückenabschnitt | 42 | |
| 3 | Sitzabschnitt | 43 | |
| 4 | Rücklehnenverstellvorrichtung | 44 | |
| 5 | Sitzkufen | 45 | |
| 6 | Querschwenkachse | 46 | |
| 7 | zusätzlicher Sitzteil | 47 | |
| 8 | Schmalkante von 7 | 48 | |
| 9 | vordere Beuteltasche | 49 | |
| 10 | Klettstreifen an 9 | 50 | |
| 11 | Randwulst am Sitzabschnitt | 51 | |
| 12 | Randwulst am Sitzabschnitt | 52 | |
| 13 | Randwulst am Rückenabschnitt | 53 | |
| 14 | Randwulst am Rückenabschnitt | 54 | |
| 15 | hintere Beuteltasche | 55 | |
| 16 | Klettstreifen an 15 | 56 | |
| 17 | Veloursabschnitt an 3 | 57 | |
| 18 | Veloursabschnitt an 2 | 58 | |
| 19 | Lumbalstütze | 59 | |
| 20 | | 60 | |
| 21 | | 61 | |
| 22 | | 62 | |
| 23 | | 63 | |
| 24 | | 64 | |
| 25 | | 65 | |
| 26 | | 66 | |
| 27 | | 67 | |
| 28 | | 68 | |
| 29 | | 69 | |
| 30 | | 70 | |
| 31 | | 71 | |
| 32 | | 72 | |
| 33 | | 73 | |
| 34 | | 74 | |
| 35 | | 75 | |
| 36 | | 76 | |
| 37 | | 77 | |
| 38 | | 78 | |
| 39 | | 79 | |
| 40 | | 80 | |

Ansprüche

1. Überzug für Sitze in Kraftfahrzeugen, bestehend aus einem Sitzabschnitt und ggf. einem Rückenabschnitt aus Natur- oder Kunststoffmaterial, bei dem am Sitzabschnitt ein um eine Querschwenkachse vor- und zurückklappbarer Sitzkeil vorgesehen ist, dessen Schmalkante sich an der Querschwenkachse befindet,

dadurch gekennzeichnet,

daß die Querschwenkachse (6) in der vorderen Hälfte des Sitzabschnittes (3) so angeordnet ist, daß der Sitzkeil (7) nach vorn über den Sitzabschnitt (3) übersteht und damit sowohl eine Verlängerung des Sitzabschnittes (3) als auch eine Oberschenkelabstützung ermöglicht.

2. Überzug nach Anspruch 1,

dadurch gekennzeichnet,

daß die Querschwenkachse (6) als Schwenkstange in den Sitzabschnitt (3) eingearbeitet ist.

3. Überzug nach einem der vorhergehenden Ansprüche

gekennzeichnet durch an den Längskanten des Sitzabschnittes (3) eingearbeitete Randwulste (11,12).

4. Überzug nach einem der vorhergehenden Ansprüche

gekennzeichnet durch

an den Seitenkanten des Rückenabschnittes (2) eingearbeitete Randwulste (13,14).

5. Überzug nach einem der Ansprüche 1 bis 4,

dadurch gekennzeichnet,

daß im unteren Bereich des Rückenabschnittes (2) eine Lumbalstütze (19) vorgesehen ist.

6. Überzug nach einem der Ansprüche 1 bis 5,

dadurch gekennzeichnet,

daß Rückenabschnitt (2) und Sitzabschnitt (3) einstückig ausgebildet sind.

FIG. 1

1

2

13

14

19

11

6

7

8

3

12

4

9

10

17

5

FIG. 2

1

14

6

11

7

8

12

16

18

15

16

9

17

3

2

5

4

1/1

0226159